# EUROPÄISCHE PATENTSCHRIFT

(11) **EP 0 575 692 B1**
(45) Veröffentlichungstag und Bekanntmachung des Hinweises auf die Patenterteilung: **03.04.1996**
(21) Anmeldenummer: 93101720.6
(22) Anmeldetag: 04.02.1993
(51) Int. Cl.: B29C 45/16

(54) **Verfahren und Vorrichtung zum Spritzgiessen von zweischichtigen Sohlen aus Gummi**
Method and device for injection moulding double-layered shoe soles made from rubber
Procédé et dispositif pour le moulage par injection de semelles en caoutchouc ayant deux couches

(30) Priorität: 30.04.1992 DE 4214254
(43) Veröffentlichungstag der Anmeldung: 29.12.1993
(73) Patentinhaber: Klöckner Desma GmbH, D-47057 Duisburg (DE)
(72) Erfinder: Drewinski, Hubert, W-2815 Langwedel (DE)
(74) Vertreter: Röther, Peter, Dipl.-Phys.

(56) Entgegenhaltungen:
- GB-A- 1 180 833
- GB-A- 1 582 309
- GB-A- 2 076 725
- GB-A- 2 105 252

## Beschreibung

Die Erfindung betrifft ein Verfahren zum Spritzgießen von zweischichtigen Sohlen aus Gummi gemäß dem Oberbegriff von Anspruch 1. Weiter betrifft die Erfindung eine Vorrichtung zum Durchführen des Verfahrens gemäß dem Oberbegriff von Anspruch 3.

Aufgrund des unterschiedlichen Reaktionsverhaltens von Gummi und thermoplastischen Kunststoffmaterialien ist der Verfahrensablauf beim Spritzgießen dieser Materialien grundsätzlich unterschiedlich, ebenso wie die erzielten Ergebnisse.

So war es bislang bei Verwendung von Gummi lediglich möglich, eine einfache, feste Gummisohle herzustellen. Zumeist wurde sie als Laufsohle eingesetzt und zwar wegen ihrer hohen Abriebfestigkeit.

Es ist auch bekannt, einen zweischichtigen Sohlenaufbau bestehend aus einer Laufsohle und einer Zwischensohle aus Gummi vorzusehen. Die zweite Sohle oder Zwischensohle erhöht den Dämpfungskomfort des Schuhs.

Aus der DE-AS 20 48 596 ist es bekannt, zweischichtige Gummisohlen in der Art und Weise an Schuhschäfte anzuformen, daß in einem ersten Verfahrenschritt eine Schaft- bzw. Komfortsohle aus einer dämpfenden Gummimasse angeformt und in einem zweiten Verfahrensschritt an diese Komfortsohle anschließend eine abriebfeste, jedoch geringe bzw. praktisch keine dämpfende Wirkung zeigende Laufsohle angespritzt wird.

Aus der DE-AS 22 41 493 ist ein Verfahren bekannt zum Herstellen von mehrschichtigen Sohlen, insbesondere aus Polyurethan und/oder Gummi, wobei der Werkstoff zur Bildung der einzelnen Schichten aufeinanderfolgend in eine Form eingespritzt wird, deren Formhohlraum bei Aufnahme des Werkstoffes größer ist als das Volumen der jeweiligen Sohlenschicht und der nach Beendigung eines Einspritzvorganges durch Verschieben des Bodenstempels auf das der Sohlenschicht entsprechende Volumen unter Formung der Sohlenschicht verkleinert wird. Nach einer Teilverfestigung des Werkstoffes wird die obere Begrenzung für die Laufsohlenschicht entfernt und durch eine obere Begrenzung für die Zwischensohlenschicht - dem Leisten - ersetzt. Danach wird der Werkstoff für die Zwischensohlenschicht in den so entstandenen Formhohlraum eingespritzt und dieser schließlich durch Verschieben der Laufsohlenschicht zur oberen Begrenzung der Zwischensohlenschicht auf die Größe der Zwischensohlenschicht verkleinert. Die Zwischensohle weist hierbei jedoch keine die Dämpfung erhöhenden Poren auf.

Schließlich ist aus der DE-A-4 022 778 ein Verfahren zum Spritzgießen von Gummisohlen bekannt, bei dem die umvulkanisierte Gummirohmasse über zwei Spritzaggregate gleichzeitig in zwei übereinander angeordnete, durch ein Zwischenstück voneinander getrennte und beheizte Formräume eingespritzt und dort zumindest vorvulkanisiert wird, wobei die Temperatur des Zwischenstücks so gewählt ist, daß in ihm eine vorzeitige Vulkanisation unterbunden wird. Das Zwischenstück ist in die Formräume einschiebbar. In ihm liegen die temperierbaren Kanäle, die die Gummirohmasse führen, die ihrerseits über Düsen eingeleitet werden. Das Zwischenstück ist ausschließlich horizontal verfahrbar.

Zur Herstellung von Sohlen aus geschäumtem Gummi ist aus der GB-A-1 180 833 ein Spritzgießverfahren bekannt, bei dem nach Teilverfestigung der Gummimischung in einer Form diese Form entlang ihres größten Umfangs geöffnet wird und somit die Gummimischung bei vergrößertem Formhohlraum gesteuert expandieren gelassen wird.

Somit gibt bislang der Stand der Technik keinerlei Hinweise darauf, eine zweischichtige Gummisohle direkt an einen Schaft anzuspritzen, wobei die Zwischensohle aus geschäumtem Gummi besteht. Dies ist bisher nur bei Verwendung von thermoplastischen Kunststoffmaterialien bekannt. Versuche mit Gummigemischen zeigten, daß die Gummimischung ein unkontrolliertes und unberechenbares Expansionsverhalten beim Aufschäumen aufwies. Die mit Gummimischung gespritzte Zwischensohle " beult " und die Maßgenauigkeit und die Profilierung ist entsprechend schlecht. Diese Sohlen sind lediglich zum Ankleben geeignet und müssen nachgearbeitet werden.

Dagegen können zwar geschäumte Kunststoffsohlen mittlerweile hergestellt werden, aber das Material Kunststoff hat einige Nachteile. Es ist synthetisch und benötigt chemische Industrie zu seiner Herstellung. Chemische Industrieanlagen aber belasten die Umwelt. Außerdem gibt es noch genügend Länder mit keiner oder nur wenig chemischer Industrie. Diese müssen Kunststoff teuer einführen. Sollte es sich auch noch um devisenschwache Länder handeln, so ist es durchaus möglich, daß für Kunststoffmaterialien kein Geld übrig ist.

Auch gibt es Länder mit Einführverboten. In Rußland dürfen beispielsweise keine PVC-Sohlen eingeführt werden, da sie den extrem niedrigen Temperaturen nicht standhalten und brechen.

Bei der Verarbeitung von Kunststoffen hat sich weiter als nachteilig erwiesen, daß die verwendeten Formteile nach jedem Spritzvorgang mit Trennmittel ausgespritzt werden müssen, was eine zusätzliche umweltbelastende Maßnahme darstellt.

Der Erfindung liegt die Aufgabe zugrunde, bei einem Verfahren bzw. einer Vorrichtung zum Spritzgießen einer zweischichtigen Gummisohle ohne besonderen gerätetechnischen Aufwand zumindest eine der beiden Sohlen als geschäumte Gummisohle herzustellen.

Die Erfindung wird durch die Merkmale des kennzeichnenden Teils des Patentanspruchs 1 gelöst.

Durch das erfindungsgemäße Verfahren wird verhütet, daß mit Öffnen der Form eine unkontrollierte Expansion des Treibmittels der Gummimischung stattfindet, mit dem Resultat einer nicht zu bestimmenden Sohlenform. Die Kombination von ausgewählter Gummimischung, dem Einhalten der üblichen Verpreßzeit, dem darauf folgenden langsamen und begrenzten Öffnen des Formhohlraums ermöglicht einen kontrollierten und gesteuerten Expansionsprozeß. Die Zwischensohle schäumt gleichmäßig auf und ist in ihrer Form und Dicke bestimmbar.

Während der Verpreßzeit vulkanisiert der Teil der Gummimasse, der direkt an den wärmenden Formteilen anliegt, schneller, so daß sich eine Speckschicht bildet. Wird nach der Verpreßzeit der Formhohlraum langsam vergrößert, so kann die Gummimasse in den Freiraum expandieren. Die zuvor gebildete seitliche Speckschicht wirkt als eine Art Führungsschiene und verhindert ein Expandieren in den sich öffnenden seitlichen Freiraum.

Durch die Länge der abgesenkten Strecke wird die Sohlenstärke bestimmt. Die Sohle kann je nach Bedarf ohne Aufwand in verschiedenen Dicken hergestellt werden.

Nach einer vorteilhaften Ausgestaltung der Erfindung wird als Gummimischung für die Zwischensohlenschicht Poro-Gummi verwendet. Poro-Gummi ist eine besondere Gummimischung mit Treibmittelzusatz, so daß das Gummi bei Erwärmung ausschäumen kann und durch Gasfreisetzung Poren entstehen und eine Sohle mit hoher Dämpfung entsteht.

Gemäß der Erfindung ist eine Vorrichtung zum Durchführen des erfindungsgemäßen Verfahrens nach Anspruch 3 vorgesehen. Mit dieser Vorrichtung kann gleichzeitig Zwischensohle und Laufsohle gespritzt werden. Das Zwischenstück ist horizontal und vertikal bewegbar, so daß zusammen mit dem Seitenformteil ein vergrößerter Formhohlraum zum Expandieren der Zwischensohle geschaffen werden kann.

Dabei können der Bodenstempel und das Zwischenstück gemeinsam vertikal verfahren werden. Durch diese Bewegung werden die Formhohlräume geschlossen. Das gemeinsame Verfahren von Zwischenstück und Bodenstempel ermöglicht weiter, daß der Formhohlraum für die Zwischensohle unabhängig vom Formhohlraum der Laufsohle geöffnet werden kann.

Die untere Formfläche des Zwischenstücks ist lediglich auf eine Temperatur von ungefähr 120°C beheizt. Bei der erfindungsgemäßen Vorrichtung werden Laufsohle und Zwischensohle gleichzeitig gespritzt. Die später beginnende Vulkanisation der Gummimischung auf der der Laufsohle zugekehrten Seite hat aber ein günstiges Verhalten bezüglich der Speckschichtbildung zur Folge. Um ein ähnliches Verhalten bei der erfindungsgemäßen Vorrichtung zu erzielen, wird der Boden des Formhohlraums der Zwischensohle auf eine Temperatur gebracht, die ungefähr der des Formhohlraumbodens mit aufliegender isolierender Laufsohle entspricht.

Gemäß einer bevorzugten Ausgestaltung der Erfindung nach Anspruch 4 sind im Zwischenstück und im Seitenformteil Einspritzkanäle für die Zuführung von Gummimischung angeordnet. Ein Seitenformteil mit Einspritzkanal ist ein bekannter Formteil üblicher Spritzgießvorrichtungen. Die erfindungsgemäße Vorrichtung ermöglicht somit, bekannte und übliche Formteile so wie sie sind einzusetzen und dezimiert damit die Kosten für einen Umbau einer üblichen Spritzform in die erfindungsgemäße Vorrichtung, um die Vorteile der Erfindung nutzen zu können.

Nach dem Herstellen von Laufsohle und geschäumter Zwischensohle wird das Zwischenstück aus der Form herausgefahren und die beiden Sohlen zusammengebracht, um auszuvulkanisieren. Dies wird durch die horizontale Beweglichkeit des Zwischenstücks bewirkt.

Zusammenfassend ist festzustellen, das erfindungsgemäße Verfahren ermöglicht eine geschäumte Gummizwischensohle herzustellen und erlaubt dabei eine herkömmliche Spritzgießvorrichtung zu verwenden. Es kann eine geschäumte Gummizwischensohle mit zuvor bestimmbarer Form, Sohlendicke und Dämpfungsgrad hergestellt und an eine Laufsohle angeschäumt werden. Das Verfahren benötigt keinen großartigen apparativen Aufbau, sondern bedient sich der üblichen Formen für Spritzgießvorrichtungen.

Die erfindungsgemäße Vorrichtung zum Durchführen des Verfahrens ermöglicht das gleichzeitige Spritzen von Zwischensohle und Laufsohle. Auch hier werden weitestgehend handelsübliche Formteile eingesetzt, wie Leisten, Seitenformteil und Bodenstempel, lediglich das Zwischenstück - ein apparativ einfach gestaltetes Teil - muß eigens für die Vorrichtung hergestellt werden.

Es ist somit geglückt, den umweltfreundlichen und nachwachsenden Rohstoff Gummi zur Herstellung einer geschäumten Zwischensohle als Material einzusetzen. Ländern ohne Industrie, in denen Gummi der einzig verfügbare - oder beschaffbare - Rohstoff für die Sohlenherstellung ist, brauchen keine teuren Importe von Kunststoffen. Transportwege und knappe Devisen können eingespart werden. Gummi als Naturstoff ist unbedenklich. Gummi unterliegt keinen Einführverboten wegen nachteiligen Nebeneffekten. So können beispielsweise Sohlen aus Gummi nach Rußland exportiert werden, da Gummi temperaturresistent ist.

In den Zeichnungen ist in einem Ausführungsbeispiel eine erfindungsgemäße Vorrichtung zum Spritzgießen dargestellt und wird im folgenden näher beschrieben. Es zeigen:
- Fig. 1:: einen Längschnitt durch den Fersenteil einer erfindungsgemäßen Vorrichtung in Einspritzposition,
- Fig. 2:: die erfindungsgemäße Vorrichtung nach Fig. 1 in Verpreßposition,
- Fig. 3:: die erfindungsgemäße Vorrichtung nach Fig. 1 während der gesteuerten Expansion der Zwischensohle,

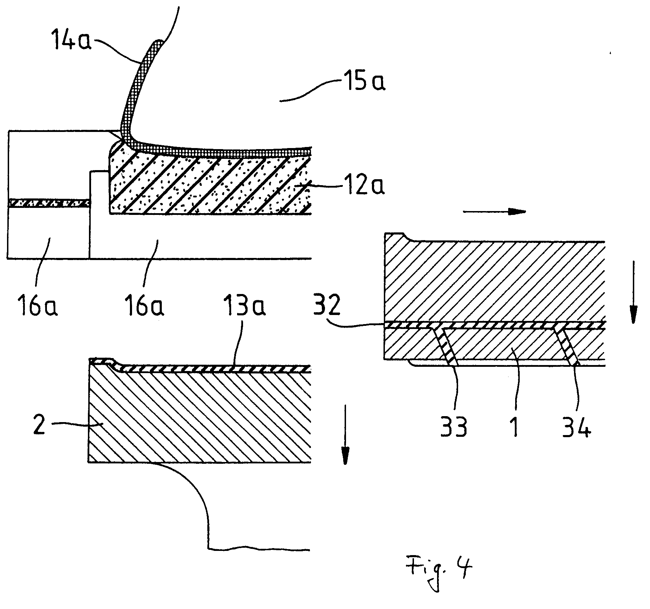

- Fig. 4:: die erfindungsgemäße Vorrichtung nach Fig. 1 mit herausgefahrenem Zwischenstück,

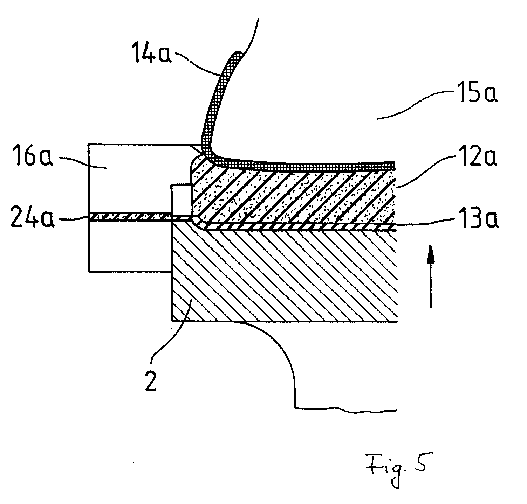

- Fig. 5:: die erfindungsgemäße Vorrichtung nach Fig. 1 während des Ausvulkanisierens der Zwischensohle mit der Laufsohle und

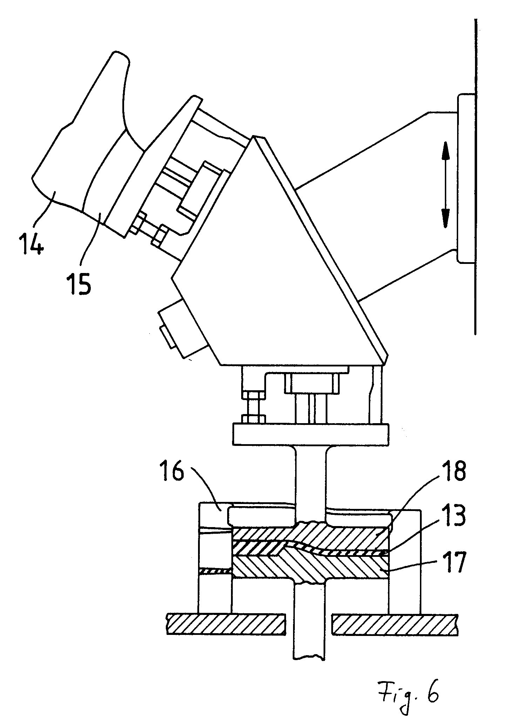

- Fig. 6:: eine Gesamtansicht der Vorrichtung gemäß Fig.1
Bei der erfindungsgemäßen Vorrichtung ist ein verfahrbares Zwischenstück 1 zwischen oberen Formteilen, bestehend aus Seitenformteil 16a und Leisten 15a mit aufgezogenem Schaft 14a und einem unteren Formteil, dem Bodenstempel 2, angeordnet.

Das Zwischenstück 1 enthält einen Einspritzkanal 32, von dem Kanäle 33, 34 abgehen. Der untere Teil des Zwischenstücks 1 ist als Verdränger ausgebildet und durch das Bezugszeichen 3 gekennzeichnet. Die Kanäle 33, 34 münden in einen Formhohlraum 5. Die Unterseite des Verdrängers 3 bildet mit seiner oberen Formfläche 9 und seinem horizontalen Formstück 30a und der Oberseite des Bodenstempels 2, bestehend aus einer unteren Formfläche 8 mit horizontalem Teilstück 31a, den Formhohlraum 5. Die Bodenstempelkontur ist als Schalenbodenstempel ausgelegt für die Fertigung einer Laufsohle 13a mit umlaufender Kante. Die Formfläche 9 weist eine Kontur 20a auf.

Die obere Formfläche des Zwischenstücks 1 setzt sich zusammen aus einem horizontalem Teilstück 26 und einer eine Kontur aufweisenden Formfläche 6 zum Formen einer Zwischensohlenunterseite. Die obere Formfläche des Zwischenstücks 1 bildet mit der Unterseite des Schafts 14a und Teilen des Seitenformteils 16a, und zwar einem horizontalen Seitenformstück 21a, welches übergeht in eine Seitenformhinterschneidung 27a und einer Dichtlippe 29a, die dichtend auf den Schaft 14a greift, den Formhohlraum 4.

Das Zwischenstück 1 ist vertikal entlang der Innenkontur des Seitenformteils 16a verschiebbar. Je nach seiner Position zum Seitenformteil 16a kann es seitlich aus der Form hinaus verfahren werden. Der Bodenstempel 2 ist nur vertikal verfahrbar.

Die einzelnen Formteile werden beim Spritzgießen auf 170° Celsius erwärmt.

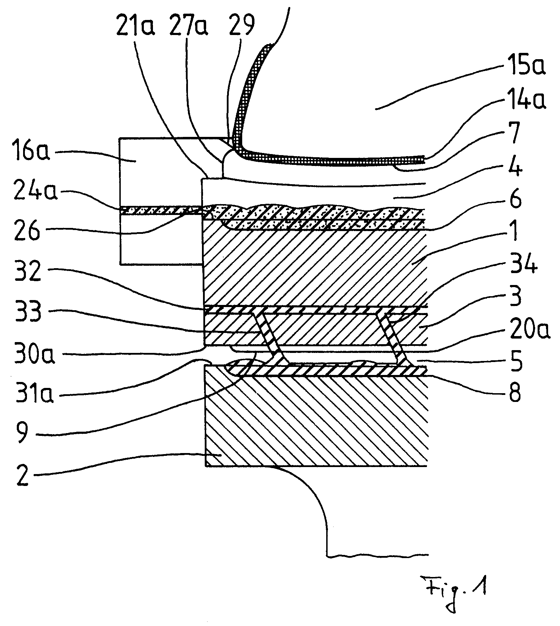

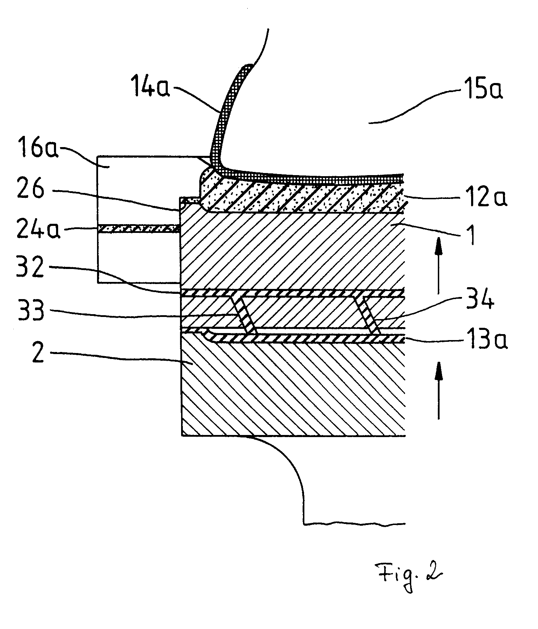

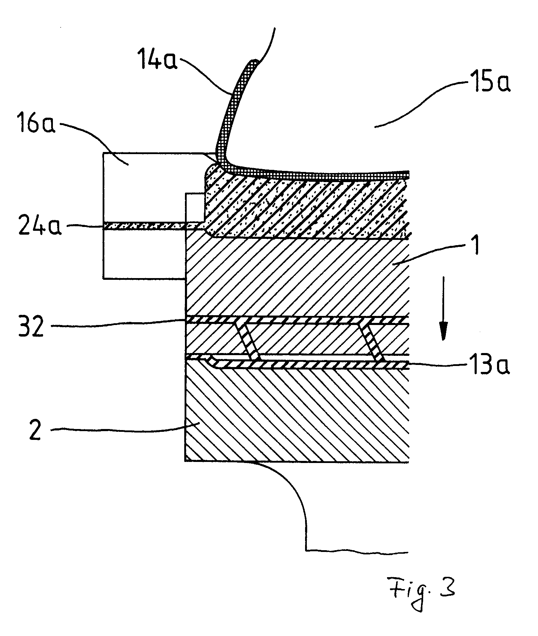

Das erfindungsgemäße Verfahren läuft wie folgt ab: Laufsohle 13a und Zwischensohle 12a werden gleichzeitig hergestellt ( Figur 1 und 2 ). Hierzu wird Gummimasse über einen Einspritzzylinder in den Einspritzkanal 32 in die Kanäle 33 und 34 in den Formhohlraum 5 eingespritzt. Zur gleichen Zeit wird Porogummi über einen Einspritzzylinder in den Kanal 24a in den Formhohlraum eingespritzt. Das Material wird durch das Einspritzen gleichmäßig in der Form verteilt. Nach dem Einspritzen wird der Bodenstempel 2 hochgefahren; dabei schließt sich der Formhohlraum 5 und das Zwischenstück 1 wird nun auf dem Bodenstempel 2 aufsitzend ebenfalls nach oben verfahren. Die Bewegung ist abgeschlossen, wenn auch der Formhohlraum 4 geschlossen ist und das eingespritzte Gummimaterial in Form und Gravur gepreßt wird. Das überschüssige Material wir dabei in die Trennebene gedrückt. Während der Verpreßzeit erhöht sich in den beheizten Formteilen die Temperatur der Gummimischung. Mit Erreichen der Reaktionstemperatur beginnt die Vulkanisation ( Figur 2 ). Nach der vorgegebenen Verpreßzeit wird das Zwischenstück 1 zusammen mit dem Bodenstempel 2 abgesenkt, so daß sich der Formhohlraum 4 nach unten vergrößert und Expansionsraum für die Poro-Masse geschaffen wird. Derweil bleibt der Formhohlraum 5 geschlossen ( Figur 3 ). In dieser Position wird solange geheizt, bis die Vernetzungsreaktion und die Treibmittelentwicklung annähernd abgeschlossen sind. Ist das Poro-Material formstabil, so können die Teile des Seitenteils 16a auseinander gefahren werden. Das Zwischenstück 1 und der Bodenstempel 2 werden gemeinsam abgesenkt. Ist die gemeinsame Absenkbewegung von Zwischenstück 1 und Bodenstempel 2 beendet, so wird der Bodenstempel 2 separat weiter abgesenkt und der Formhohlraum 5 geöffnet. Das Zwischenstück wird aus dem Werkzeug herausgefahren.

Der Bodenstempel 2 mit Laufsohle 13a wird hochgefahren und Laufsohle 13a und Zwischensohle 12a werden in Kontakt gebracht und können nun gemeinsam ausvulkanisieren.

## Patentansprüche

1. Verfahren zum Spritzgießen von zweischichtigen Sohlen (12a, 13a) aus Gummi bzw. Gummimischungen und Verbinden derselben miteinander sowie gegebenenfalls mit einem Schuhschaft (14), wobei
a) die Gummimischung für die zwischensohlenschicht (12a) und die Laufsohlenschicht (13a) gleichzeitig in die entsprechenden Formhohlräume (4,5) eingespritzt wird,
b) danach die Formhohlräume (4,5), die durch ein Zwischenstück (1) voneinander abteilbar sind, durch Hochfahren eines Bodenstempels (2) geschlossen werden,
c) daraufhin das Gummimaterial bis zu einer bestimmten Reaktionstemperatur in Form und Gravur verpreßt wird,
d) danach ein Expansionsraum für die Zwischensohlenschicht (12a) gebildet wird, in dem der entsprechende Formhohlraum (4) durch Absenken des Zwischenstücks (1) zusammen mit dem Bodenstempel (2) nach unten vergrößert wird,
e) danach, bei ausreichender Formstabilität der aufgeschämmten Zwischensohlenschicht, das Zwischenstück (1) und der Bodenstempel (2) soweit abgesenkt werden, um das Zwischenstück (1) aus dem Werkzeug herauszufahren,
f) daraufhin die Laufsohle (13a) mit der Zwischensohle (12a) durch Hochfahren des Bodenstempels (2) in Kontakt gebracht und ausvulkanisiert werden.

2. Verfahren nach Anspruch 1,
dadurch gekennzeichnet, daß als Gummimischung für die Zwischesohlenschicht (12a) Poro-Gummi verwendet wird.

3. Vorrichtung zum Durchführen des Verfahrens nach Anspruch 1 oder 2, mit einem Leisten (15), einem Seitenformteil (16a), einem Bodenstempel (2) und einem Zwischenstück (1), die relativ zueinander bewegbar sind, wobei das Zwischenstück (1) zwischen dem Seitenformteil (16a) und dem auf diesem aufsetzbaren Leisten (15a) und dem Bodenstempel (2) angeordnet ist und sowohl horizontal als auch vertikal verfahrbar ist.

4. Vorrichtung nach Anspruch 3,
dadurch gekennzeichnet, daß der Bodenstempel (2) vertikal verfahrbar ist.

5. Vorrichtung nach Anspruch 3 oder 4,
dadurch gekennzeichnet, daß das Zwischenstück (1) eine untere Formfläche (6) aufweist.

6. Vorrichtung nach Anspruch 3 bis 5,
dadurch gekennzeichnet, daß im Seitenformteil (16a) ein Werkstoffeinspritzkanal (24a) mit Öffnung zum Formhohlraum (4) und im Zwischenstück (1) ein Werkstoffeinspritzkanal (32) mit abgehenden Kanälen (33,34) mit Öffnungen zum Formhohlraum (5) angeordnet ist.

7. Vorrichtung nach Anspruch 6,
dadurch gekennzeichnet, daß im Bodenstempel (2) ein Werkstoffeinspritzkanal mit Öffnungen zum Formhohlraum (5) angeordnet ist.

## Claims

1. Process for injection moulding of rubber or rubber mixture into two-layer soles (12a, 13a) and connecting the two layers to one another and if required to a shoe upper (14),
in which
a) the rubber mixture for the midsole layer (12a) and the outsole layer (13a) is injected simultaneously into the corresponding mould cavities (4,5),
b) the mould cavities (4,5), separable from one another by a movable adapter (1), are subsequently closed by a bottom mould element (bottom die) (2) which is moved upwards from below,
c) the rubber material is then moulded in form and pattern till a predefined reaction temperature has been reached,
d) following this operation an expansion space for the midsole layer (12a) is formed by enlarging the corresponding mould cavity (4) downwards for which purpose the movable adapter (1) is lowered along with the bottom mould element (bottom die) (2),
e) after that, when the foamed midsole layer (12a) has sufficiently stabilized, the movable adapter (1) and the bottom mould element (bottom die) (2) are lowered till the movable adapter (1) can be withdrawn from the apparatus,
f) finally, by raising the bottom mould element (bottom die) (2), the outsole layer (13a) and the midsole layer (12a) are put into contact with one another and allowed to vulcanize completely.

2. Process according to claim 1
characterized in
that poro-rubber is used as rubber mixture for the midsole layer (12).

3. Apparatus for application of the process according to claim 1 or 2, including a list (15), a lateral mould element (16a), a bottom mould element (2) and a movable adapter (1) which are shiftable relatively to one another, the movable adapter (1) being accommodated between the lateral mould element (16a) and the list (15a) - which can be placed on that lateral mould element - and the bottom mould element (2), and being shiftable both vertically and horizontally.

4. Apparatus according to claim 3
characterized in
that the bottom mould element can be shifted vertically.

5. Apparatus according to claim 3 or 4,
characterized in
that the movable adapter (1) has a moulding face (6) on its bottom side forming the lower limiting face of the midsole.

6. Apparatus according to claim 3 to 5,
characterized in
that the lateral mould element (16a) has a channel (24a) through which material is injected into the mould cavity (4), and that the movable adapter (1) has an injection channel (32) from which other channels (33,34) lead to the mould cavity (5).

7. Apparatus according to claim 6,
characterized in
that a material injection channel leading to the mould cavity (5) is arranged in the bottom mould element (2).

## Revendications

1. Procédé de moulage par injection de semelles à double couche (12a, 13a) en caoutchouc ou en mélange de caoutchouc, et rattachement des deux couches l'une à l'autre ainsi que, le cas échéant, à une tige de chaussure(14),
dans quel procédé
a) le mélange de caoutchouc pour les semelles intérieure (12a) et extérieure (13a) est injecté simultanément dans les creux des moules correspondants (4,5),
b) les creux de moule (4,5), séparables l'un de l'autre par un élément séparateur mobile (1), sont ensuite fermés par un élément de moule inférieur (2) qui monte d'en dessous,
c) le caoutchouc est ensuite pressé en forme et gravure jusqu'à atteindre une température de réaction préalablement définie
d) ensuite, pour former la semelle intérieure (12a), une espace d'expansion est créée en élargissant le creux correspondant (4) vers le bas par abaissement simultané de l'élément séparateur mobile (1) et de l'élément de morne inférieur (2),
e) ensuite, dès que la couche de semelle intérieure (12a) aura atteint une stabilité de forme suffisante, l'élément séparateur mobile (1) et l'élément de morne inférieur (2) sont abaissés jusq'à permettre de sortir l'élément séparateur (1) de l'appareil,
f) dans l'opération suivante, par l'élément de moule inférieur (2) déplacé vers le haut, la semelle extérieure (13a) est rapprochée de la semelle intérieure (12a) et il se produit la vulcanisation complète des deux semelles.

2. Procédé suivant la revendication 1,
caractérisé par
ce que du poro-caoutchouc est utilisé comme mélange pour la fabrication des semelles intérieures (12a).

3. Appareil pour la réalisation du procédé suivant la revendication 1 ou 2 avec forme (15), élément de morne latéral (16a), élément de morne inférieur (2) et élément séparateur mobile (1), dont chacun peut être déplacé relativement aux trois autres, l'élément séparateur mobile (1) étant disposé entre l'élément de morne latéral (16a), la forme (15a), laquelle peut être placée sur ce dernier, et l'élément de morne inférieur (2), ledit élément séparateur mobile (1) pouvant être déplacé horizontalement et verticalement.

4. Appareil suivant la revendication 3,
caractérisé par
ce que l'élément de moule inférieur (2) peut être déplacé verticalement.

5. Appareil suivant les revendications 3 ou 4,
caractérisé par
ce que le dessous de l'élément séparateur mobile (1) dispose d'une surface de moulage (6) qui forme la face limite inférieure de la semelle intérieure.

6. Appareil suivant les revendications 3 à 5,
caractérisé par
ce que l'élément de morne latéral (16a) dispose d'un canal d'injection de matière première (24a) débouchant dans le creux du morne (4), et que l'élément séparateur mobile (1) dispose d'un canal d'injection de matière première (32) dont des canaux de branchement (33,34) débouchent dans le creux du moule (5).

7. Appareil suivant la revendication 6,
caractérisé par
ce qu'un canal d'injection de matière première avec des orifices débouchant dans le moule (5) est disposé dans l'élément de morne inférieur (2).
